# EUROPÄISCHE PATENTSCHRIFT

(11) **EP 1 267 615 B1**
(45) Veröffentlichungstag und Bekanntmachung des Hinweises auf die Patenterteilung: **17.12.2003**
(21) Anmeldenummer: 01905706.6
(22) Anmeldetag: 30.01.2001
(51) Int. Cl.: B05C 17/005, B65D 83/00, B05B 11/00

(54) **Dosierspender**
Dosage dispenser
Distributeur doseur

(30) Priorität: 11.02.2000 DE 10006209
(43) Veröffentlichungstag der Anmeldung: 02.01.2003
(73) Patentinhaber: Bayer CropScience AG, 40789 Monheim (DE)
(72) Erfinder: MAHLSTEDT, Jürgen, 59505 Bad Sassendorf (DE); KRINGS, Siegfried, 41540 Dormagen (DE); SCHUELLER, Franz-Peter, 41540 Dormagen (DE); ISRAELS, Rafel, 40764 Langenfeld (DE)
(86) Internationale Anmeldenummer: EP0100962
(87) Internationale Veröffentlichungsnummer: WO01058260

(56) Entgegenhaltungen:
- EP-A- 0 376 097
- EP-A- 0 531 257
- WO-A-99/15425
- DE-A- 19 528 529
- US-A- 4 323 175
- US-A- 5 827 522
- US-A- 5 931 347
- US-E- R E33 247

## Beschreibung

Die Erfindung betrifft einen neuen Dosierspender und dessen Verwendung in der Landwirtschaft und im Gartenbau.

Bei der Bekämpfung von tierischen Pflanzenschädlingen mit Hilfe von Pestiziden ist man bestrebt, eine Kontamination der zu schützenden Pflanzen und ihrer Umgebung einschließlich des Bodens, auf dem sie wachsen, zu minimieren. Außerdem sollen Nützlinge und Warmblüter durch die pestiziden Wirkstoffe möglichst wenig beeinträchtigt werden. Im Gegensatz dazu sollen aber die zu bekämpfenden Schädlinge den pestiziden Wirkstoffen möglichst intensiv ausgesetzt werden, damit die Schädlinge die Wirkstoffe durch Kontakt, als Fraßgifte oder über die Gasphase in ausreichender Menge aufnehmen können.

Die genannten Bedingungen lassen sich bei der Bekämpfung von Insekten zum Beispiel dadurch erfüllen, dass man Signal substanzen, wie Pheromone, Kairomone oder Lockstoffe, die auf Insekten anziehend wirken, mit insektiziden Wirkstoffen kombiniert und die entstehenden Mischungen nicht flächendeckend, sondern nur eng lokal begrenzt an einzelnen Stellen in den zu schützenden Bestand ausbringt. Da die Signalsubstanzen an den behandelten Orten freigesetzt werden, bewegen sich die Schädlinge dorthin, kontaminieren sich mit den pestiziden Wirkstoffen und werden abgetötet. Diese Art der Insektenbekämpfung wird als "Attract-and-kill"-Methode bezeichnet.

Es sind bereits zahlreiche Zubereitungen bekannt geworden, denen das geschilderte Prinzip der Bekämpfung tierischer Schädlinge zugrunde liegt (vgl. EP-A 0 376 888, WO 87/04 591, EP-A 0 721 735 und WO 97/05 778). So lässt sich z.B. der Apfelwickler (Cydia Pomonella) mit Hilfe von Formulierungen bekämpfen, die aus E,E-8,10-Dodecadienol, einem mit Wasser wenig mischbaren UV-Absorber, Cyfluthrin, Rizinusöl und weiteren Zusatzstoffen bestehen. Die Wirksamkeit dieser Zubereitungen ist gut, lässt aber bei sehr geringen Aufwandmengen in manchen Fällen zu wünschen übrig.

Weiterhin sind schon zahlreiche Dosierspender zur Applikation geringer Mengen an pastösen Substanzen beschrieben worden (vgl. z.B. US-A 4 323 175, WO 99/15425 ). Ungünstig an diesen bekannten Geräten ist jedoch, dass sich sehr kleine Produktvolumina nicht immer mit genügender Genauigkeit auftragen lassen. Ein anderer Nachteil besteht darin, dass auch nach beendeter Applikation häufig noch zusätzliche Paste aus dem Spender quillt. Außerdem erfolgt das Herauspressen der Paste mit Hilfe von Drucktasten, deren Bedienung insbesondere dann, wenn mehrfach nacheinander Substanz aufgetragen wird, unbequem und ermüdend ist.

Es wurde nun ein Mittel gefunden, das aus
4,0 Gew.-% Cyfluthrin,
7,5 Gew.-% 2-Ethylhexyl-2-cyano-3,3-diphenyl-2-propenoat,
7,5 Gew.-% 2-Hydroxy-4-methoxybenzophenon,
0,2 Gew.-% Butylhydroxytoluol,
0,5 Gew.-% Rizinusöl-ethoxylat mit einem mittleren Ethoxylierungsgrad von 30,
0,1 Gew.-% E,E-8,10-Dodecadienol,
5,0 Gew.-% teilhydrophobiertem Kieselgel und
75,2 Gew.-% Rizinusöl
besteht und sehr gut zur Bekämpfung des Apfelwicklers (Cydia pomonella) geeignet ist.

Das Mittel fällt in pastöser Form an.

Das Mittel lässt sich sehr gut zur Bekämpfung des Apfelwicklers (Cydia pomonella) nach der "Attract-and-kill"-Methode in der Landwirtschaft und im Gartenbau einsetzen. Dabei wird das Mittel vorzugsweise in Form von Tröpfchen punktuell auf die zu behandelnden Pflanzen oder Kulturflächen ausgebracht. Besonders geeignet ist das Mittel zur Behandlung von Stammobstkulturen.

Die Mengen, in denen das Mittel ausgebracht wird, können innerhalb eines bestimmten Bereiches variiert werden. Sie liegen in der Größenordnung, die üblicherweise für den Einsatz von "Attract-and-kill"-Formulierungen gewählt wird. Im Allgemeinen genügen 1 bis 3 Tröpfchen von jeweils etwa 0,1 ml pro Baum.

Besonders vorteilhaft erfolgt die Ausbringung des Mittels mit einem erfindungsgemäßen Dosierspender.

Die vorliegende Erfindung betrifft einen Dosierspender, bestehend aus
a) einem zylindrischen Gefäß, an dessen Unterseite sich ein dicht abschließender, vertikal verschiebbarer Bodeneinsatz befindet,
b) einem auf die Oberseite des zylindrischen Gefäßes fest aufsetzbaren Kopfteil, bestehend aus
   - einem fest aufsetzbaren Deckel, in dem durch eine seitliche Öffnung ein abgeknickter Hebel angebracht ist, dessen Bewegungsmöglichkeit in axialer Richtung durch eine außen am Deckel befindliche Erhebung und in vertikaler Richtung durch das zylindrische Gefäß begrenzt ist, und
   - einer eingesetzten Kolbenpumpe mit Tellerventilen für Ein- und Auslass,
   wobei der abgeknickte Hebel über ein Widerlager so mit der Kolbenpumpe verbunden ist, dass Substanz gefördert werden kann und das Oberteil der Kolbenpumpe hermetisch dicht im Deckelgehäuse angebracht ist und das Unterteil der Kolbenpumpe hermetisch dicht mit dem zylindrischen Gefäß verbunden ist,
c) einer vertikal in das Kopfteil eingelassenen, rohrförmigen, in vertikaler Richtung beweglichen, aber dicht abschließenden Tülle, deren Unterteil in die Kolbenpumpe eingeführt ist und deren aus dem Deckelgehäuse herausragender Teil etwa auf halber Höhe eine horizontale Wanderweiterung aufweist,
   und
d) einer Verschlusskappe, die auf die Öffnung der Tülle gesteckt werden kann.

Der erfindungsgemäße Dosierspender zeichnet sich durch eine Reihe von Vorteilen aus. So ist es damit möglich, sehr kleine Mengen an pastöser Substanz wiederholbar und jeweils exakt dosiert auf Pflanzen oder Gegenstände aufzutragen. Günstig ist auch, dass nach beendeter Applikation kein zusätzliches Produkt aus dem Spender herausquillt. Außerdem erfordert das Herauspressen der Paste fast keinen Kraftaufwand. Es lässt sich daher in bequemer Weise vielfach nacheinander wiederholen, ohne dass durch die Bedienung des Hebels eine Ermüdung eintritt. Im Übrigen lässt sich die bewegliche Tülle durch einmaliges Herunterdrücken mit Substanz füllen, so dass ein Vorpumpen ohne Substanzauftrag entfällt.

Als zylindrische Gefäße kommen im Falle des erfindungsgemäßen Dosierspenders Rohre infrage, die an der oberen Innenseite mit einer Befestigungsvorrichtung versehen sind und an deren Unterseite sich ein dicht abschließender, vertikal verschiebbarer Bodeneinsatz befindet.

Die Größe der zylindrischen Gefäße kann innerhalb eines bestimmten Bereiches variiert werden. So setzt man Zylinder ein, deren Volumen im Allgemeinen zwischen 5 und 500 ml, vorzugsweise zwischen 30 und 250 ml liegt. Die Größe der übrigen Teile des erfindungemäßen Dosierspenders hängt von den Dimensionen des zylindrischen Gefäßes ab.

Als vertikal verschiebbare Bodeneinsätze kommen alle für derartige Zwecke in Dosiervorrichtungen verwendbaren Teile in Betracht. Bevorzugt sind flach oder U-förmig gestaltete Bodeneinsätze. Teile dieser Art sind bereits bekannt.

Das Kopfteil des erfindungsgemäßen Dosierspenders enthält einen etwa U-förmig gestalteten Deckel mit einer Befestigungsvorrichtung an der Innenseite des vertikalen Teiles und einer flachen Öffnung im vertikalen Teil. Durch diese seitliche Öfnung ist ein abgeknickter Hebel eingeführt, dessen Bewegungsmöglichkeit in axialer Richtung durch eine außen am vertikalen Teil des Deckels befindliche, wulstartige Erhebung begrenzt wird und dessen horizontale Bewegungsmöglichkeit durch das zylindrische Gefäß begrenzt wird. Der durch die Betätigung des Hebels erzeugte Hub ist daher durch die genannten Bauteile sehr genau vorgegeben.

Als Kolbenpumpen können in dem erfindungsgemäßen Dosierspender übliche, zur Förderung kleiner Substanzmengen geeignete Pumpen eingesetzt werden, die an der Außenseite eine Befestigungsvorrichtung aufweisen und innen mit Tellerventilen für Einlass und Auslass von Paste ausgestattet sind. Pumpen dieses Typs sind bereits bekannt (vgl. WO 99/15 424 und WO 99/15 425).

Die Form und die Größe der Hebel kann innerhalb bestimmter Bereiche variiert werden. Sie richten sich im Wesentlichen nach den übrigen Dimensionen des erfindungsgemäßen Dosierspenders. Der Hebel ist über ein Widerlager jeweils so mit der Kolbenpumpe verbunden, dass durch Betätigung des Hebels Produkt aus dem zylindrischen Gefäß nach oben gefördert wird.

Das Oberteil der Dosierpumpe ist hermetisch dicht in den Deckel eingefügt, während das Unterteil der Kolbenpumpe hermetisch dicht in das zylindrische Gefäß eingesetzt ist.

Als Tüllen können im Falle des erfindungsgemäßen Dosierspenders rohrförmige, vorzugsweise sich nach oben konisch verengende, gerade oder auch gebogene Hohlkörper eingesetzt werden. Die Wand der Tülle weist eine horizontale Erweiterung auf, an der man anfassen und die Tülle so weit herabdrücken kann, dass sich die Tülle mit Substanz füllt. Die Erweiterung kann die Tülle z.B. ringförmig, elliptisch oder oval umgeben. Außerdem kann die Erweiterung auch winkelförmig an gegenüberliegenden Seiten der Tülle angebracht sein. Die Höhe, in der die Wanderweiterung angebracht ist, muss so gewählt sein, dass die Tülle weit genug heruntergedrückt werden kann, um sich dabei mit Substanz zu füllen.

Als Verschlusskappen kommen im Falle des erfindungsgemäßen Dosierspenders übliche Bauteile infrage, die so geformt sind, dass sie beim Aufstecken oder Aufschrauben auf die Tülle deren Öffnung abdichten.

Die Einzelteile des Dosierspenders werden kraftschlüssig fest, im allgemeinen durch sogenanntes Prellen miteinander verbunden.

Zur Herstellung des erfindungsgemäßen Dosierspenders kommen alle für derartige Zwecke üblichen Materialen in Betracht. Vorzugsweise verwendbar sind Kunststoffe, wie Polyethylen oder Polypropylen, ferner Metalle, wie Aluminium, gegebenenfalls in beschichteter Form, wobei die Werkstoffe gegenüber den im Spender vorhandenen Pasten inert sein müssen.

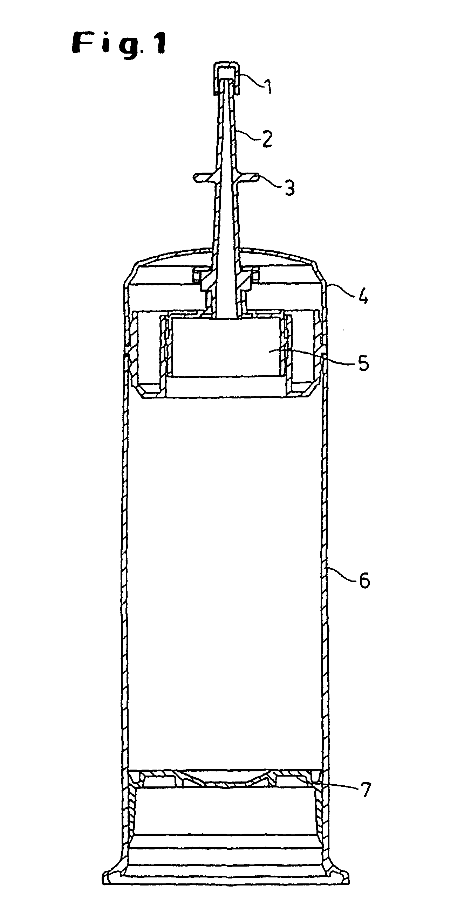

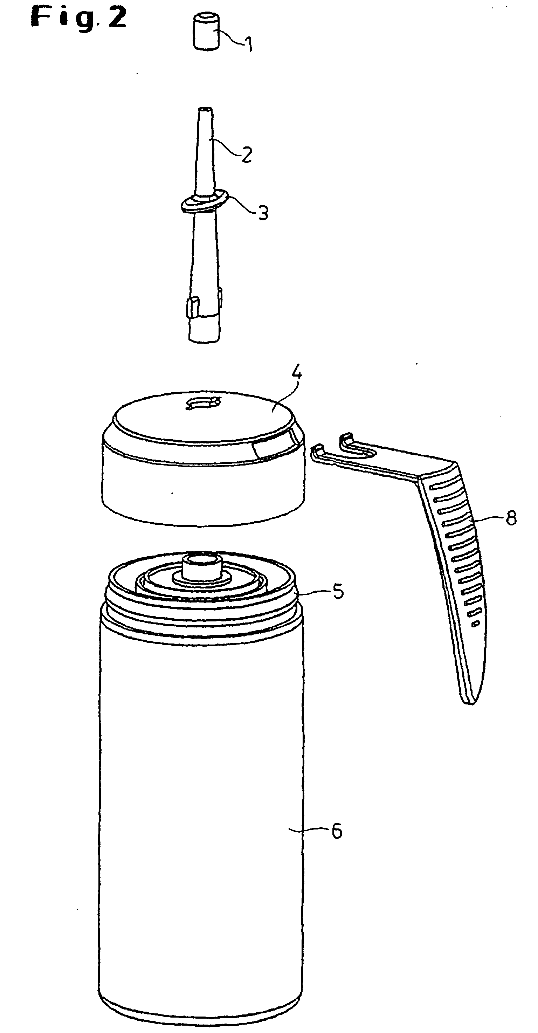

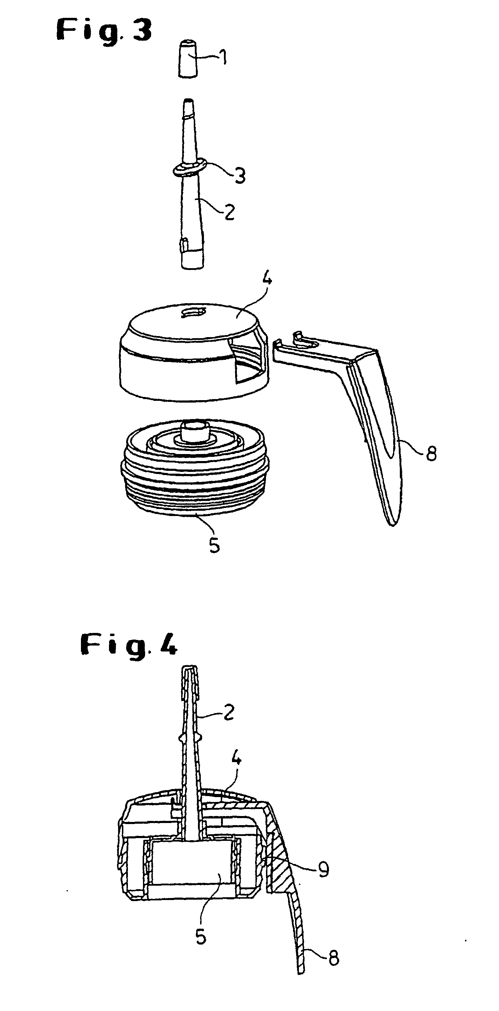

Eine besonders bevorzugte Ausführungsform des erfindungsgemäßen Dosierspenders ist in den Abbildungen 1 bis 4 dargestellt.
- Abb. 1: zeigt einen Querschnitt durch den Dosierspender
- Abb. 2: zeigt Einzelteile, aus denen der Dosierspender zusammengesetzt ist
- Abb. 3: zeigt Einzelteile, aus denen Kopfteil und Tülle des Dosierspenders zusammengesetzt sind
- Abb. 4: zeigt einen Querschnitt durch Kopfteil und Tülle des Dosierspenders.

In diesen Abbildungen bezeichnen die angegebenen Zahlen die folgenden Bauteile:
1 = Verschlusskappe
2 = Tülle
3 = Wanderweiterung
4 = Deckel
5 = Kolbenpumpe
6 = Zylinder
7 = Bodeneinsatz
8 = Hebel
9 = seitlicher Ansatz am Deckelgehäuse.

Zum Beschicken des erfindungsgemäßen Dosierspenders wird die pastöse Substanz gegebenenfalls bei erhöhter Temperatur in das zylindrische Gefäß gefüllt. Dieses wird anschließend durch Aufsetzen des Kopfteiles verschlossen.

Zur Benutzung des gefüllten Dosierspenders verfährt man im Allgemeinen in der Weise, dass man die Tülle an der als Haltevorrichtung dienenden Wanderweiterung festhält und herunterdrückt, so dass sie sich mit Paste füllt, die sich im Pumpenraum befindet. Es ist aber auch möglich, die Paste durch Betätigen des Hebels in die Tülle zu fördern. Das Auftragen der Paste auf Pflanzen oder Gegenstände erfolgt dann so, dass man die geöffnete Tülle nahe an die Applikationsfläche hält und den Hebel einmal betätigt. Da das zylindrische Gefäß gegenüber der umgebenden Atmosphäre hermetisch abgeschlossen ist, entsteht im Innern nach dem Herauspressen von Paste ein Unterdruck. Dieser bedingt, dass der bewegliche Bodeneinsatz allmählich nach oben gezogen wird. Auf diese Weise kann das zylindrische Gefäß nahezu vollständig entleert und die enthaltene Substanz weitestgehend genutzt werden.

In Abhängigkeit von den Dimensionen des Dosierspenders kann die durch einmalige Hebelbetätigung applizierbare Pastenmenge innerhalb eines bestimmten Bereiches exakt dosiert werden. Im Allgemeinen werden die Dimensionen so gewählt, dass eine definierte Menge zwischen 0,01 und 1 ml, vorzugsweise zwischen 0,05 und 0,5 ml aufgetragen wird.

Im Falle der erfindungsgemäßen "Atract-and-kill"-Formulierung wählt man den Spender so, dass jeweils konstant eine Menge von etwa 0,1 ml abgegeben wird.

Der erfindungsgemäße Dosierspender ist geeignet, um Pasten mit Viskositäten zwischen 20 000 und 250 000 cPoise zu applizieren.

Das Mittel wird durch die folgenden Beispiele veranschaulicht.

### Beispiel

Zur Herstellung der "Attract-and-kill"-Formulierung werden

| | |
|---|---|
| 4,0 Gew.-% | Cyfluthrin, |
| 7,5 Gew.-% | 2-Ethylhexyl-2-cyano-3,3-diphenyl-2-propenoat (= UV-Absorber A), |
| 7,5 Gew.-% | 2-Hydroxy-4-methoxy-benzophenon (= UV-Absorber B), |
| 0,2 Gew.-% | Butylhydroxytoluol, |
| 0,1 Gew.-% | E,E-8,10-Dodecadienol und |
| 5,0 Gew.-% | teil-hydrophobiertes Kieselgel |

homogen vermischt und danach auf 80°C erhitzt. Das Gemisch wird dann bei 80°C unter Rühren in ein ebenfalls auf 80°C erhitztes Gemisch aus
75,2 Gew.-% Rizinusöl und
0,5 Gew.-% Rizinusölethoxylat mit einem mittleren Ethoxylierungsgrad von 30
gegeben. Das Gemisch wird so lange bei 80°C gerührt, bis eine klare Lösung entsteht. Nach dem anschließenden Abkühlen auf Raumtemperatur erhält man eine Formulierung von pastöser Konsistenz.

## Patentansprüche

1. Dosierspender, bestehend aus
a) einem zylindrischen Gefäß (6), an dessen Unterseite sich ein dicht abschließender, vertikal verschiebbarer Bodeneinsatz (7) befindet,
b) einem auf die Oberseite des zylindrischen Gemäßes fest aufsetzbaren Kopfteil, bestehend aus
- einem fest aufsetzbaren Deckel (4), in dem durch eine seitliche Öffnung ein abgeknickter Hebel (8) angebracht ist, dessen Bewegungsmöglichkeit in axialer Richtung durch eine außen am Deckel befindliche Erhebung (9) und in vertikaler Richtung durch das zylindrische Gefäß begrenzt ist, und
- einer eingesetzten Kolbenpumpe (5) mit Tellerventilen für Ein- und Auslass,
wobei der abgeknickte Hebel über ein Widerlager so mit der Kolbenpumpe verbunden ist, dass Substanz gefördert werden kann und das Oberteil der Kolbenpumpe hermetisch dicht im Deckelgehäuse angebracht ist und das Unterteil der Kolbenpumpe hermetisch dicht mit dem zylindrischen Gefäß verbunden ist,
c) einer vertikal in das Kopfteil eingelassenen, rohrförmigen, in vertikaler Richtung beweglichen, aber dicht abschließenden Tülle (2), deren Unterteil in die Kolbenpumpe eingeführt ist und deren aus dem Deckelgehäuse herausragender Teil etwa auf halber Höhe eine horizontale Wanderweiterung (3) aufweist und
d) einer Verschlusskappe (1), die auf die Öffnung der Tülle gesteckt werden kann.

2. Dosierspender nach Anspruch 1, **dadurch gekennzeichnet dass** bei einmaliger Betätigung des Hebels (8) 0,01 bis 1 ml Paste dosiert werden.

3. Verwendung von Dosierspendern nach Anspruch 1 oder 2 zur Applikation von Pestiziden Mitteln.

4. Verwendung von Dosierspendem nach Anspruch 1 oder 2 zur Applikation von "Attract and Kill" Formulierungen

5. Verwendung von Dosierspendern nach Anspruch 1 oder 2 zur Applikation von in der Landwirtschaft oder im Gartenbau verwendeten Mitteln.

6. Verwendung von Dosierspendern nach Anspruch 1 oder 2 zur Applikation von Pasten mit Viskositäten zwischen 20.000 und 250.000 cPoise.

## Claims

1. Dosage dispenser consisting of
a) a cylindrical container (6) at whose underside there is located a tightly sealing, vertically displaceable bottom insert (7),
b) a top component capable of being fitted firmly to the upper side of the cylindrical container and consisting of
- a lid (4) capable of being fitted firmly and in which a cranked lever (8) is attached via a lateral port, the mobility of which lever being limited axially by an elevation (9) located outside on the lid and vertically by the cylindrical vessel, and
- an inserted reciprocating pump (5) with poppet inlet and outlet valves,
the cranked lever being connected with the reciprocating pump via an abutment in such a way that material can be conveyed and the upper part of the reciprocating pump being arranged in the housing of the lid to form a hermetic seal and the bottom part of the reciprocating pump being connected to the cylindrical container in such a way that it forms a hermetic seal,
c) a tube-shaped spout (2) which is arranged vertically within the top part and can move vertically but with a tight seal, and whose bottom part extends into the reciprocating pump and whose part which extends out of the housing of the lid is provided at approximately half its height with a horizontal wall ridge (3), and
d) a sealing cap (1) which can be placed on the spout opening.

2. A dosing dispenser according to Claim 1, **characterized in that** a single actuation of the lever (8) provides a dose of 0.01 to 1 ml of paste.

3. Use of dosage dispensers according to Claim 1 or 2 for the application of pesticidal compositions.

4. Use of dosage dispensers according to Claim 1 or 2 for the application of attract-and-kill formulations.

5. Use of dosage dispensers according to Claim 1 or 2 for the application of compositions used in agriculture or horticulture.

6. Use of dosage dispensers according to Claim 1 or 2 for the application of pastes with viscosities of between 20 000 and 250 000 cPoise.

## Revendications

1. Distributeur doseur, constitué de,
a) un récipient cylindrique (6), à la face inférieure duquel se trouve un élément de fond (7) mobile verticalement, fermant de manière étanche,
b) une pièce de tête se fixant à la face supérieure du récipient cylindrique, constituée de
- un couvercle (4) pouvant être fixé, dans lequel un levier replié (8) est attaché à travers une ouverture latérale, sa mobilité étant limitée en direction axiale par un bossage (9) se trouvant à l'extérieur sur le couvercle et en direction verticale par le récipient cylindrique, et
- une pompe à piston (5) insérée avec soupapes à disques pour l'entrée et la sortie,
le levier replié étant relié via une butée à la pompe à piston de telle façon que la substance peut être refoulée et que la partie supérieure de la pompe à piston est disposée de manière hermétiquement étanche dans le boîtier du couvercle et la partie inférieure de la pompe à piston est reliée de manière hermétiquement étanche au récipient cylindrique,
c) un embout (2) tubulaire inséré verticalement dans la pièce de tête, mobile en direction verticale, mais fermant de manière étanche, dont la partie inférieure est introduite dans la pompe à piston et dont la partie dépassant du boîtier du couvercle présente environ à mi-hauteur un élargissement de paroi (3) horizontal et
d) un capuchon (1) qui peut être enfiché sur l'ouverture de l'embout.

2. Distributeur doseur suivant la revendication 1, **caractérisé en ce qu'**on dose de 0,01 à 1 ml de pâte pour un actionnement unique du levier (8).

3. Utilisation de distributeurs doseurs suivant la revendication 1 ou 2 pour l'application de produits pesticides.

4. Utilisation de distributeurs doseurs suivant la revendication 1 ou 2 pour l'application de formulations "Attract and Kill"

5. Utilisation de distributeurs doseurs suivant la revendication 1 ou 2 pour l'application de produits utilisés dans l'agriculture ou l'horticulture.

6. Utilisation de distributeurs doseurs suivant la revendication 1 ou 2 pour l'application de pâtes d'une viscosité comprise entre 20.000 et 250.000 centipoises. '
